(19) **Europäisches Patentamt**

**European Patent Office**

**Office européen des brevets**

(11) **EP 1 242 795 B1**

(12) **EUROPÄISCHE PATENTSCHRIFT**

(45) Veröffentlichungstag und Bekanntmachung des Hinweises auf die Patenterteilung:
**06.04.2005 Patentblatt 2005/14**

(21) Anmeldenummer: 00991063.9

(22) Anmeldetag: **14.12.2000**

(51) Int Cl.$^7$: **G01L 5/04**, B21B 38/06

(86) Internationale Anmeldenummer:
**PCT/DE2000/004457**

(87) Internationale Veröffentlichungsnummer:
**WO 2001/047650 (05.07.2001 Gazette 2001/27)**

(54) **VERFAHREN UND EINRICHTUNG ZUR BESTIMMUNG DES ZUGES ODER DER ZUGSPANNUNG IN EINEM METALLBAND**

METHOD AND DEVICE FOR DETERMINING THE TENSION OR THE TENSILE STRESS IN A METAL STRIP

PROCEDE ET DISPOSITIF POUR DETERMINER LA TENSION OU LA CONTRAINTE DE TENSION DANS UNE BANDE METALLIQUE

(84) Benannte Vertragsstaaten:
**AT BE DE FI**

(30) Priorität: **27.12.1999 DE 19963183**

(43) Veröffentlichungstag der Anmeldung:
**25.09.2002 Patentblatt 2002/39**

(73) Patentinhaber: **SIEMENS AKTIENGESELLSCHAFT
80333 München (DE)**

(72) Erfinder:
• **STAMMBERGER, Karl
91056 Erlangen (DE)**
• **TÜRK, Felix
80636 München (DE)**

(56) Entgegenhaltungen:
**US-A- 3 850 031       US-A- 4 073 007
US-A- 4 928 538**

**Beschreibung**

Die Erfindung betrifft eine Einrichtung und ein Verfahren zur Bestimmung der Zugspannung bzw. des Bandzuges in einem Metallband zwischen zwei Auflagestellen, z.B. zwischen zwei Walzgerüsten, zwischen Walzgerüst und Haspel, zwischen Walzgerüst und Umlenkrolle, zwischen zwei Umlenkrollen oder zwischen den Rollen in einer Reck- und Streckrichteinheit, mit Sensoren zur Messung der Schwingung des Metallbandes.

Es ist der Einsatz einer Umlenkrolle bekannt, die zwischen einem Walzgerüst und einem Haspel angeordnet ist, und über welche ein Metallband geführt wird. Unter den Lagern der Umlenkrolle sind Kraftsensoren angeordnet, die die Lagerkräfte messen. Aus den Lagerkraftkomponenten und dem Umlenkwinkel werden die in Bandrichtung wirkenden Kräfte ermittelt. Bei kleinen Bandzügen und geringen Umlenkwinkeln ist das System stark fehlerbehaftet, da die Meßfehler der gemessenen kleinen Kräfte und kleinen Umlenkwinkel in der Umrechnung auf den Bandzug zu erheblichen Fehlern führen.

In einer weiteren bekannten Ausführung wird das Drehmoment, welches im Antriebsstrang zwischen Haspeldorn und Motorwelle wirkt, gemessen. Nachteilig in diesem Falle ist, daß sich der große Meßbereich des Bandzuges nochmals erweitert um das mögliche Verhältnis zwischen maximalem und minimalem Bundradius. Auch in diesem Falle sind die Fehler bei geringem Bandzug und geringem Bunddurchmesser sehr groß, so daß die Genauigkeitsforderungen nur mit hohem Aufwand befriedigt werden können.

Beide Verfahren besitzen wie jedes Meßverfahren eine Reihe von Fehlerquellen, die letztendlich zu Meßfehlern in der Größenordnung von 1 bis 2% bezogen auf den Meßbereichsendwert führen. Insbesondere beim Walzen dünner Enddicken an Reversierwalzgerüsten (z. B. Folienwalzgerüsten) kann das Verhältnis von maximalem zu minimalem Bandzug zwischen Walzgerüst und Haspel an einem Gerüst in der Größenordnung von 50 liegen. Unter Berücksichtigung der Forderung, daß auch bei minimalem Bandzug eine Meßgenauigkeit von mindestens 10% des aktuellen Bandzuges erreicht werden muß, sind die Grenzen der realisierbaren Betriebsmeßtechnik erreicht, denn wenn diese gerade noch tolerierbaren Fehler auf den maximalen Bandzug bzw. den noch darüber liegenden Meßbereichsendwert bezogen werden, darf unter den Bedingungen der relative Meßfehler nur in der Größenordnung von 1‰ liegen.

Die US 3,850,031 beschreibt ein Verfahren, bei dem ein kaltgewalztes Metallband, das auf seine Planheit hin zu überprüfen ist, über zwei in einem Abstand zueinander angeordnete Auflagenrollen gezogen wird und zu Schwingungen zwischen diesen Auflagenrollen erregt wird. Dazu sind in Längszonen des Bandes Schwingungserreger vorgesehen, wobei jedem Schwingungserreger ein Schwingungsempfänger zugeordnet ist, der die Schwingung des Bandes erfasst und eine korrespondierende Oszillation auf einen Messverstärker überträgt. Dem Messverstärker ist ein Filter nachgeordnet, der lediglich die Grundschwingung der empfangenen zusammengesetzten Schwingung überträgt, wobei die Harmonischen unterdrückt werden. Die resultierende Fundamentalschwingung wird in einem Signalgenerator verwendet, welcher auf einen Anstieg der Schwingungsamplitude über einen eingestellten Grenzwert anspricht. Die Antwort dieses Signalgenerators veranlasst eine Anzeige der momentanen Erregerfrequenz die von einem die Schwingungserreger versorgenden Frequenzgenerator geliefert wird um in einen Speicher abgespeichert zu werden.

Ziel der Erfindung ist die Umgehung der aus dem Stand der Technik bekannten Nachteile und insbesondere die Realisierung eines Meßverfahrens, welches eine wesentliche Verbesserung der Meßgenauigkeit, insbesondere im Bereich kleiner Bandzüge, gewährleistet.

Die Aufgabe wird durch eine Einrichtung gemäß Anspruch 1 bzw. ein Verfahren gemäß Anspruch 15 gelöst. Weiterbildungen sind in den jeweiligen Unteransprüchen angegeben.

Dabei wird zur Bestimmung der Zugspannung bzw. des Zuges in einem Metallband zwischen zwei Auflagestellen, z.B. zwischen zwei Walzgerüsten, zwischen Walzgerüst und Haspel, zwischen Walzgerüst und Umlenkrolle, zwischen zwei Umlenkrollen oder zwischen den Rollen in einer Reck- und Streckrichteinheit, die Schwingung des Bandes senkrecht zur Bandebene gemessen und daraus ein oder mehrere Eigenfrequenzen dieser Schwingung des Metallbandes bestimmt. Eine erfindungsgemäße Einrichtung weist einen Auslenkungssensor zur Messung der Schwingung des Metallbandes und einen Frequenzanalysator zur Bestimmung einer oder mehrerer Eigenfrequenzen der Schwingung des Metallbandes senkrecht zur Bandebene in Abhängigkeit der Auslenkung des Metallbandes auf. Zur Bestimmung der Eigenfrequenz ermittelt der Frequenzanalysator zunächst das Frequenzspektrum des von dem Auslenkungssensor gelieferten Messsignals. Auf diese Weise ist eine besonders präzise Bestimmung des Bandzuges bzw. der Zugspannung im Metallband möglich, insbesondere auch bei geringen Bandzügen.

In vorteilhafter Ausgestaltung der Erfindung wird die Eigenfrequenz des Metallbandes zwischen den zwei Auflagestellen, z.B. zwischen zwei Walzgerüsten, zwischen Walzgerüst und Haspel, zwischen Walzgerüst und Umlenkrolle, zwischen zwei Umlenkrollen oder zwischen den Rollen in einer Reck- und Streckrichteinheit, insbesondere mittels eines Frequenzenanalysators durch Bestimmung einer dominierenden Frequenz einer Schwingung des Metallbandes ermittelt.

In weiterhin vorteilhafter Ausgestaltung der Erfindung erfolgt die Berechnung des Zuges oder der Zugspannung im Metallband insbesondere mittels eines Zugberechners in Abhängigkeit der Eigenfrequenz des Metallbandes.

In weiterhin vorteilhafter Ausgestaltung der Erfindung wird die Zugspannung σ im Metallband gemäß

$$\sigma = l^2 c \rho f^2$$

ermittelt, wobei

l die Länge des Metallbandes zwischen den zwei Walzgerüsten, zwischen dem Walzgerüst und dem Haspel, in dem Streckgerüst oder vor oder hinter der Umlenkrolle,
c eine Konstante,
ρ die Dichte des Metallbandes und
f die Eigenfrequenz des Metallbandes

ist.

In weiterhin vorteilhafter Ausgestaltung der Erfindung wird der Zug s im Metallband gemäß

$$s = l^2 c \rho h b f^2$$

ermittelt, wobei

l die Länge des Metallbandes zwischen den zwei Walzgerüsten, zwischen dem Walzgerüst und dem Haspel, in dem Streckgerüst oder vor oder hinter der Umlenkrolle,
c eine Konstante,
ρ die Dichte des Metallbandes,
h die Dicke des Metallbandes,
b die Breite des Metallbandes und
f die Eigenfrequenz des Metallbandes

ist.

In weiterhin vorteilhafter Ausgestaltung der Erfindung wird die Auslenkung des Metallbandes, insbesondere mittels Auslenkungssensoren, an, in Querrichtung des Metallbandes betrachtet, unterschiedlichen Stellen des Metallbandes gemessen.

In weiterhin vorteilhafter Ausgestaltung der Erfindung sind zumindest

$$3\frac{b}{l}$$

Auslenkungssensoren zur Messung der Auslenkung des Metallbandes vorgesehen, wobei die Auslenkungssensoren derart angeordnet sind, daß sie die Auslenkung des Metallbandes an, in Querrichtung des Metallbandes betrachtet, unterschiedlichen Stellen des Metallbandes messen. Dabei ist

l die Länge des Metallbandes zwischen den zwei Walzgerüsten, zwischen dem Walzgerüst und dem Haspel, in dem Streckgerüst oder vor oder hinter der Umlenkrolle, und

b die Breite des Metallbandes.

In weiterhin vorteilhafter Ausgestaltung der Erfindung sind die zumindest zwei Auslenkungssensoren derart angeordnet, daß sie die Auslenkung des Metallbandes, in Querrichtung des Metallbandes betrachtet, zumindest alle 50 cm messen.

In vorteilhafter Ausgestaltung der Erfindung sind die Sensoren bzw. die Sensorzeile in Längsrichtung des Bandes vorzugsweise an den Stellen der Maximalamplitude der der betreffenden Eigenfrequenz zugeordneten Schwingform angeordnet, d.h. bei 1/2 bezogen auf die erste Eigenfrequenz, bei 1/4 bezogen auf die zweite Eigenfrequenz usw.

In weiterhin vorteilhafter Ausgestaltung der Erfindung wird der Zug im Metallband aus von zumindest zwei Auslenkungssensoren ermittelten Meßwerten, insbesondere mittels eines Mittelwertbildners, ermittelt.

In weiterhin vorteilhafter Ausgestaltung der Erfindung ist eine Umlenkrolle zum Umlenken des Metallbandes vorgesehen.

In weiterhin vorteilhafter Ausgestaltung der Erfindung ist eine Auslenkvorrichtung zur periodischen Auslenkung des Metallbandes, d.h. insbesondere zur Erzeugung einer Eiegewelle, insbesondere einer Biegewelle in Längsrichtung des Metallbandes, vorgesehen.

In weiterhin vorteilhafter Ausgestaltung der Erfindung lenkt die Auslenkvorrichtung das Metallband mit einer Frequenz aus, die im Bereich der Eigenfrequenz liegt.

In weiterhin vorteilhafter Ausgestaltung der Erfindung ist ein Regler zur Regelung der Auslenkvorrichtung in Abhängigkeit eines mittels des Auslenkungssensors ermittelten Wertes vorgesehen.

Weitere Einzelheiten und Vorteile ergeben sich aus nachfolgender Beschreibung von Ausführungsbeispielen. Im einzelnen zeigen:

Fig. 1 eine Einrichtung zur Bestimmung des Zuges oder der Zugspannung in einem Metallband,

Fig. 2 die Anordnung von Auslenkungssensoren auf einer Meßleiste,

Fig. 3 eine alternative Einrichtung zur Bestimmung des Zuges oder der Zugspannung in einem Metallband,

Fig. 4 eine weitere alternative Einrichtung zur Bestimmung des Zuges oder der Zugspannung in einem Metallband und

Fig. 5 eine weitere alternative Einrichtung zur Bestimmung des Zuges oder der Zugspannung in einem Metallband

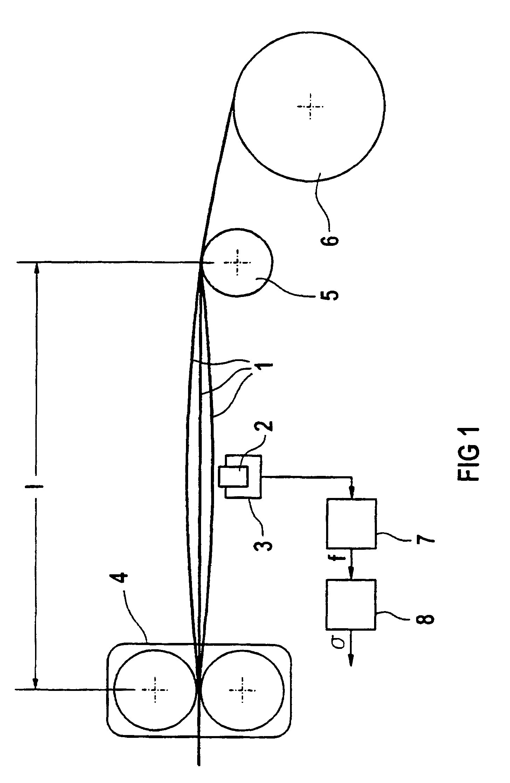

Fig. 1 zeigt eine Einrichtung zur Bestimmung des Zuges s oder der Zugspannung σ in einem Metallband 1, daß aus einem Walzgerüst 4 ausläuft und auf einen Haspel 6 aufgewickelt wird. Zwischen dem Walzgerüst 4 und dem Haspel 6 ist eine Umlenkrolle 5 angeordnet. Zwischen dem Walzgerüst 4 und der Umlenkrolle 5 schwingt bzw. vibriert das Metallband 1. Dies ist durch die drei mit 1 bezeichneten Linien dargestellt, die das Metallband symbolisieren. Unterhalb des Metallbandes 1 ist ein Auslenkungssensor 2 vorgesehen. Der Auslenkungssensor 2 kann auch oberhalb des Metallbandes 1 angeordnet sein. Mittels des Auslenkungssensors 2 wird die Auslenkung des Metallbandes 1 zwischen dem Walzgerüst und der Umlenkrolle 5 erfaßt und an einen Frequenzanalysator 7 übermittelt. Der Frequenzanalysator 7 ermittelt, z. B. durch eine FFT, das Frequenzspektrum des von dem Auslenkungssensor 2 gelieferten Meßsignals. Aus dem Frequenzspektrum ermittelt der Frequenzanalysator 7 die dominierende Grundschwingungen und gibt diese als Eigenfrequenz f des Metallbandes 1 zwischen dem Walzgerüst 4 und der Umlenkrolle 5 aus. Die Eigenfrequenz f des Metallbandes 1 zwischen dem Walzgerüst 4 und der Umlenkrolle 5 ist Eingangsgröße in einem Zugberechner 8.

Der Zugberechner 8 ermittelt die Zugspannung σ im Metallband 1 gemäß

$$\sigma = l^2 c \rho f^2$$

wobei

l     die Länge des Metallbandes 1 zwischen dem Walzgerüst 4 und der Umlenkrolle 5,
c     eine Konstante,
ρ     die Dichte des Metallbandes 1 und
f     die Eigenfrequenz des Metallbandes 1 zwischen dem Walzgerüst 4 und der Umlenkrolle 5

ist.

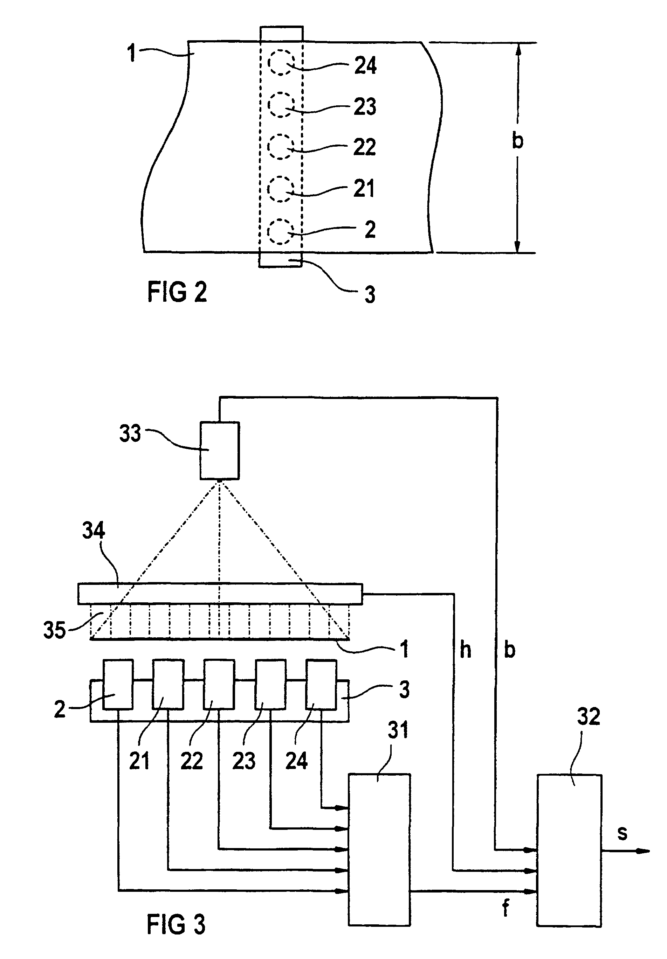

Es kann vorgesehen werden, daß der Zugberechner 8 anstelle der oder zusätzlich zu der Zugspannung σ den Zug 5 im Metallband 1 berechnet. In diesem Fall ermittelt der Zugberechner den Zug s im Metallband 1 gemäß

$$s = l^2 c \rho h b f^2$$

wobei

h     die Dicke des Metallbandes 1 und
b     die Breite des Metallbandes 1 (vgl. Fig. 2)

ist.

In vorteilhafter Ausgestaltung der Einrichtung zur Bestimmung des Zuges s oder der Zugspannung σ in dem Metallband 1 ist vorgesehen, daß der Auslenkungssensor 2 Teil einer Meßleiste 3 ist. Eine derartige Meßleiste 3 weist vorteilhafterweise mehrere Auslenkungssensoren 2, 21, 22, 23 und 24 auf, wie in Fig. 2 gezeigt ist. Fig. 2 zeigt dabei eine Draufsicht auf das Metallband 1.
Eine Meßleiste weist vorteilhafterweise zumindest n Auslenkungssensoren zur Messung der Auslenkung des Metallbandes mit

$$n \geq 3\frac{b}{l}$$

auf.

Fig. 3 zeigt ein besonders vorteilhaftes Ausführungsbeispiel für eine Einrichtung zur Bestimmung des Zuges s oder der Zugspannung σ in einem Metallband 1, wobei das Metallband 1 im Querschnitt dargestellt ist. Dabei werden die Meßsignale der Auslenkungssensoren 2, 21, 22, 23 und 24, die Teil einer Meßleiste 3 sind, in einem Frequenzanalysator 31 ausgewertet. Der Frequenzanalysator 31 bildet Spektralanalysen der von den Auslenkungssensoren 2, 21, 22, 23 und 24 ermittelten Meßsignal, bestimmt deren dominierende Grundfrequenz und bildet aus den einzelnen dominierenden Grundfrequenzen einen Mittelwert. Dieser Mittelwert wird als Eigenfrequenz f ausgegeben. Ein Frequenzanalysator 7 gemäß Fig. 1 ist in gleicher Weise ausgebildet, wenn er die Signale mehrerer Sensoren auswertet.

In vorteilhafter Ausgestaltung ist ein Breitenmeßgerät 33 zur Messung der aktuellen Breite b des Metallbandes 1 vorgesehen. Ferner ist in vorteilhafter Ausgestaltung ein Dickenmeßgerät 34 vorgesehen, daß die aktuelle Dicke h des Metallbandes 1 in verschiedenen Meßzonen 35 mißt. Die Eigenfrequenz f, die Dicke h des Metallbandes 1 und die Breite b des Metallbandes 1 sind Eingangsgrößen in einem Zugberechner 32. Der Zugberechner berechnet den Zug s und/oder die Zugspannung σ in analoger Weise zum Zugberechner 8 in Fig. 1.

In alternativer Ausgestaltung ist vorgesehen, daß der Frequenzanalysator 31 an Stelle der einen Eigenfrequenz f, die dominierenden Grundfrequenzen in den Meßwerten der einzelnen Auslenkungssensoren 2, 21, 22, 23, 24 ausgibt. Die einzelnen signifikanten Grundfrequenzen werden in dieser alternativen Ausgestaltung mittels des Zugrechners 32 in zugehörige Zugspannungen σ umgerechnet und daraus mit Hilfe eines Mittelwertbildners ein Mittelwert der Zugspannung gebildet. Der Mittelwert der Zugspannung und daraus abgeleitet der Zug s wird ausgegeben.

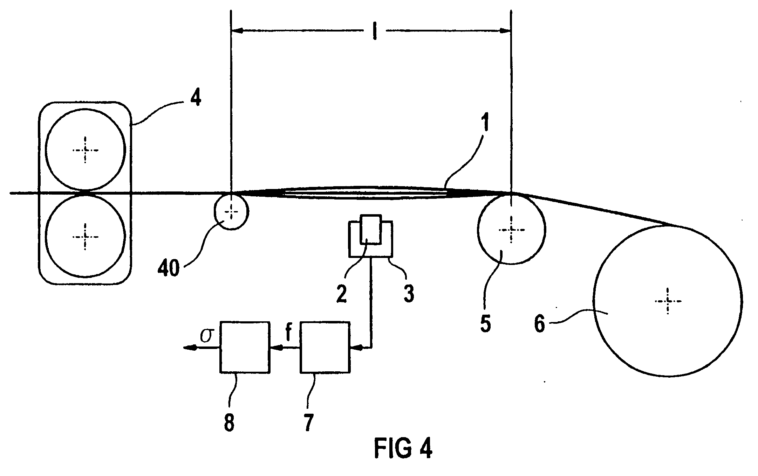

Fig. 4 zeigt ein weiteres vorteilhaftes Ausführungsbeispiel und eine Einrichtung zur Messung des Zuges s bzw. der Zugspannung σ in einem Metallband 1. Dazu ist gegenüber dem Ausführungsbeispiel in Fig. 1 zwischen dem Auslenkungssensor 2 und dem Walzgerüst 4 eine zusätzliche Umlenkrolle 40 vorgesehen. Der Auslenkungssensor 2 mißt die Auslenkung des Metallbandes 1 zwischen der Umlenkrolle 40 und der Umlenkrolle 5. Durch diese Maßnahme verkleinert sich die Länge 1 des freischwingenden Teils des Metallbandes 1. Dieser kürzere freischwingende Teil des Metallbandes 1 hat eine höhere Eigenfrequenz f. Dies bewirkt, daß die Eigenfrequenz f schneller bestimmt werden kann.

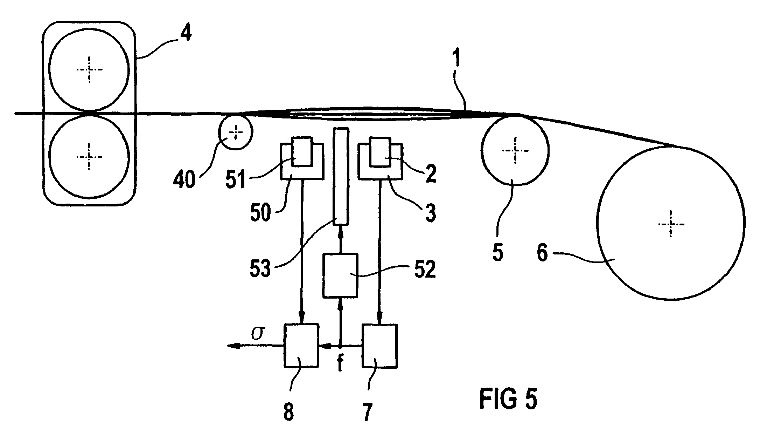

Fig. 5 zeigt ein weiteres vorteilhaftes Ausführungsbeispiel für eine Einrichtung zur Bestimmung des Zuges s oder der Zugspannung σ in einem Metallband 1. Dieses Ausführungsbeispiel weist eine Auslenkvorrichtung 53 auf, die dem Metallband 1 eine Auslenkung einprägt. Ein besonders vorteilhaftes Ausführungsbeispiel für so eine Auslenkvorrichtung kann z. B. der DE 198 03 260 A1 entnommen werden. Fig. 5 zeigt den Einsatz der Auslenkvorrichtung 53 in Zusammenhang mit dem Ausführungsbeispiel gemäß Fig. 4. Die Auslenkvorrichtung kann jedoch auch in Zusammenhang mit den anderen Ausführungsbeispielen eingesetzt werden. Die Auslenkvorrichtung 53 lenkt das Metallband 1 periodisch aus, wobei die Frequenz der periodischen Auslenkung in der Nähe der Eigenfrequenz f des Metallbandes 1 zwischen den Umlenkrollen 5 und 40 liegt. In besonders vorteilhafter Ausgestaltung ist ein Regler 52 vorgesehen, der die Auslenkvorrichtung 53 in Abhängigkeit der vom Frequenzanalysator ermittelten Eigenfrequenz f derart regelt, daß die periodische Auslenkung durch den Auslenkungssensor 53 mit der ermittelten Eigenfrequenz f erfolgt. In besonders vorteilhafter Ausgestaltung sind die Auslenkvorrichtung 53 und der Auslenkungssensor 2 zugleich Teil einer Einrichtung zur Messung der Zugspannungsverteilung im Metallband 1 wie sie in der DE 198 03 260 A1 offenbart ist. Dabei ist in vorteilhafter Ausgestaltung zusätzlich ein in Längsrichtung des Teilbandes 1 angeordneter weiterer Auslenkungssensor 51 vorgesehen, der Teil einer Meßleiste 50 sein kann.

**Patentansprüche**

1. Einrichtung zur Bestimmung der Zugspannung (σ) oder des Zuges (s) in einem Metallband (1) zwischen zwei Auflagestellen (40, 5), z.B. zwischen zwei Walzgerüsten, zwischen Walzgerüst (4) und Haspel (6), zwischen Walzgerüst (4) und Umlenkrolle (5) oder zwischen den Rollen in einer Reck- und Streckrichteinheit, mit mindestens einem Auslenkungssensor (2, 21, 22, 23, 24) zur Messung der Schwingung des Metallbandes (1) senkrecht zur Bandebene, **dadurch gekennzeichnet,daß** die Einrichtung zur Bestimmung der Zugspannung (σ) oder des Bandzuges (s) einen Frequenzanalysator (7, 13) zur Ermittlung des Frequenzspektrums des von dem mindestens einen Auslenkungssensors (2) gelieferten Messsignals und zur Bestimmung der Eigenfrequenz des Metallbandes unter Berücksichtigung der dominierenden Frequenz enthält.

2. Einrichtung nach Anspruch 1, **dadurch gekennzeichnet, daß** der Frequenzanalysator (7, 31) die Eigenfrequenz des Metallbandes (1) zwischen den zwei Walzgerüsten, zwischen dem Walzgerüst (4) und dem Haspel (6), in dem Streckgerüst oder vor oder hinter der Umlenkrolle (5, 40), durch Bestimmung einer dominierenden Frequenz einer Schwingung des Metallbandes (1) ermittelnd ausgebildet ist.

3. Einrichtung nach Anspruch 1 oder 2, **dadurch gekennzeichnet, daß** sie einen Zugberechner (8, 32) zur Berechnung des Zuges (s) oder der Zugspannung (σ) im Metallband (1) in Abhängigkeit der Eigenfrequenz des Metallbandes (1) aufweist.

4. Einrichtung nach Anspruch 3, **dadurch gekennzeichnet, daß** der Zugberechner (8, 32) die Zugspannung σ im Metallband (1) gemäß

$$\sigma = l^2 c \rho f^2$$

ermittelt, wobei

l    die Länge des Metallbandes (1) zwischen den zwei Walzgerüsten, zwischen dem Walzgerüst (4) und dem Haspel (6), in dem Streckgerüst oder vor oder hinter der Umlenkrolle (5, 40),

c    eine Konstante,

ρ    die Dichte des Metallbandes (1) und

f    die Eigenfrequenz des Metallbandes (1)

ist.

5. Einrichtung nach Anspruch 3 oder 4, **dadurch gekennzeichnet, daß** der Zugberechner (8, 32) den Zug s im Metallband (1) gemäß

$$s = l^2 c \rho h b f^2$$

ermittelt, wobei

l    die Länge des Metallbandes (1) zwischen den zwei Malzgerüsten, zwischen dem Walzgerüst (4) und dem Haspel (6), in dem Streckgerüst oder vor oder hinter der Umlenkrolle (5, 40),
c    eine Konstante,
ρ    die Dichte des Metallbandes (1),
h    die Dicke des Metallbandes (1),
b    die Breite des Metallbandes (1) und
f    die Eigenfrequenz des Metallbandes (1)

ist.

6. Einrichtung nach Anspruch 1, 2, 3, 4 oder 5, **da-**

**durch gekennzeichnet, daß** sie zumindest zwei Auslenkungssensoren (2, 21, 22, 23, 24) zur Messung der Auslenkung des Metallbandes (1) aufweist, wobei die zumindest zwei Auslenkungssensoren (2, 21, 22, 23, 24) derart angeordnet sind, daß sie die Auslenkung des Metallbandes (1) an, in Querrichtung des Metallbandes (1) betrachtet, unterschiedlichen Stellen des Metallbandes (1) messen.

7. Einrichtung nach Anspruch 6, **dadurch gekennzeichnet, daß** sie zumindest

$$3\frac{b}{l}$$

Auslenkungssensoren (2, 21, 22, 23, 24) zur Messung der Auslenkung des Metallbandes (1) aufweist, wobei die Auslenkungssensoren (2, 21, 22, 23, 24) derart angeordnet sind, daß sie die Auslenkung des Metallbandes (1) an, in Querrichtung des Metallbandes (1) betrachtet, unterschiedlichen Stellen des Metallbandes (1) messen, wobei

l die Länge des Metallbandes (1) zwischen den zwei Walzgerüsten, zwischen dem Walzgerüst (4) und dem Haspel (6), in dem Streckgerüst oder vor oder hinter der Umlenkrolle (5, 40), und

b die Breite des Metallbandes (1)

ist

8. Einrichtung nach Anspruch 6 oder 7, **dadurch gekennzeichnet, daß** sie zumindest zwei Auslenkungssensoren (2, 21, 22, 23, 24) zur Messung der Auslenkung des Metallbandes (1; aufweist, wobei die zumindest zwei Auslenkungssensoren (2, 21, 22, 23, 24) derart angeordnet sind, daß sie die Auslenkung des Metallbandes (1) in Querrichtung des Metallbandes (1) betrachtet zumindest alle 50 cm messen.

9. Einrichtung nach Anspruch 6, 7 oder 8, **dadurch gekennzeichnet, daß** sie die Zugspannung ($\sigma$) aus von den zumindest zwei Auslenkungssensoren (2, 21, 22, 23, 24) ermittelten Meßwerten mittels eines Mittelwertbildners ermittelnd ausgebildet ist.

10. Einrichtung nach einem der vorhergehenden Ansprüche, **dadurch gekennzeichnet, daß** sie eine Umlenkrolle (5, 40) zum Umlenken des Metallbandes (1) aufweist.

11. Einrichtung nach einem der vorhergehenden Ansprüche, **dadurch gekennzeichnet, daß** sie eine Auslenkvorrichtung zur periodischen Auslenkung des Metallbandes (1) aufweist.

12. Einrichtung nach Anspruch 11, **dadurch gekennzeichnet, daß** die Auslenkvorrichtung das Metallband mit einer Frequenz auslenkt, die im Bereich der Eigenfrequenz liegt.

13. Einrichtung nach Anspruch 11 oder 12, **dadurch gekennzeichnet, daß** sie einen Regler zur Regelung der Auslenkvorrichtung in Abhängigkeit eines mittels des Auslenkungssensors (2, 21, 22, 23, 24) ermittelten Wertes aufweist.

14. Einrichtung zur Bestimmung des Bandzuges nach einem der vorherigen Ansprüche, **dadurch gekennzeichnet, daß** die Auslenkungsensoren (2,21,22,23, 24) in Längsrichtung des Metallbandes (1) an den Stellen angeordnet sind, an denen die Maximalamplitude der charakteristischen Schwingform der für die Spannungsermittlung verwendeten Eigenfrequenz auftritt.

15. Verfahren zur Bestimmung des Zuges (s) oder der Zugspannung ($\sigma$) in einem Metallband (1) zwischen zwei Walzgerüsten, zwischen einem Walzgerüst (4) und einem Haspel (6), in einem Streckgerüst oder vor oder hinter einer Umlenkrolle (5, 40), insbesondere mittels einer Einrichtung nach einem der vorhergehenden Ansprüche, wobei die Auslenkung des Metallbandes (1) gemessen wird, **dadurch gekennzeichnet, daß** aus mindestens einem Messsignal für die Auslenkung ein Frequenzspektrum ermittelt wird, mit Hilfe dessen die Eigenfrequenz des Metallbandes (1) in Abhängigkeit der Auslenkung des Metallbandes (1) bestimmt wird.

16. Verfahren nach Anspruch 15, **dadurch gekennzeichnet, daß** die Eigenfrequenz des Metallbandes (1) unter Zuhilfenahme einer Maximalamplitude, die bei der Analyse des jeweiligen Eigenfrequenzbereiches in Erscheinung tritt, bestimmt wird.

**Claims**

1. Device for determining the tensile stress ($\sigma$) or the tension (s) in a metal strip (1) between two bearing points (40, 5), for example between two roll stands, between a roll stand (4) and a coiler (6), between a roll stand (4) and a deflection roll (5) or between the rolls in a stretching and tension-levelling unit, with at least one excursion sensor (2, 21, 22, 23, 24) for measuring the oscillation of the metal strip (1) perpendicularly to the plane of the strip, **characterized in that** the device for determining the tensile stress ($\sigma$) or the strip tension (s) includes a frequency analyser (7, 13) for determining the frequency spectrum of the measuring signal supplied by the at least one excursion sensor (2) and for determining the natural frequency of the metal strip, taking the dominant frequency into account.

2. Device according to Claim 1, **characterized in that** the frequency analyser (7, 31) is formed such that it determines the natural frequency of the metal strip (1) between the two roll stands, between the roll stand (4) and the coiler (6), in the breakdown stand or in front of or behind the deflection roll (5, 40), by determining a dominant frequency of an oscillation of the metal strip (1).

3. Device according to Claim 1 or 2, **characterized in that** it has a tension calculator (8, 32) for calculating the tension (s) or the tensile stress (σ) in the metal strip (1) on the basis of the natural frequency of the metal strip (1).

4. Device according to Claim 3, **characterized in that** the tension calculator (8, 32) determines the tensile stress σ in the metal strip (1) according to

$$\sigma = 1^2 c \rho f^2,$$

where

l   is the length of the metal strip (1) between the two roll stands, between the roll stand (4) and the coiler (6), in the breakdown stand or in front of or behind the deflection roll (5, 40),
c   is a constant,
ρ   is the density of the metal strip (1) and
f   is the natural frequency of the metal strip (1).

5. Device according to Claim 3 or 4, **characterized in that** the tension calculator (8, 32) determines the tension s in the metal strip (1) according to

$$s = 1^2 c \rho h b f^2,$$

where

l   is the length of the metal strip (1) between the two roll stands, between the roll stand (4) and the coiler (6), in the breakdown stand or in front of or behind the deflection roll (5, 40),
c   is a constant,
ρ   is the density of the metal strip (1),
h   is the thickness of the metal strip (1),
b   is the width of the metal strip (1) and
f   is the natural frequency of the metal strip (1).

6. Device according to Claim 1, 2, 3, 4 or 5, **characterized in that** it has at least two excursion sensors (2, 21, 22, 23, 24) for measuring the excursion of the metal strip (1), the at least two excursion sensors (2, 21, 22, 23, 24) being arranged in such a way that they measure the excursion of the metal strip (1) at different points of the metal strip (1), viewed in the transverse direction of the metal strip (1).

7. Device according to Claim 6, **characterized in that** it has at least

$$3\frac{b}{l}$$

excursion sensors (2, 21, 22, 23, 24) for measuring the excursion of the metal strip (1), the excursion sensors (2, 21, 22, 23, 24) being arranged in such a way that they measure the excursion of the metal strip (1) at different points of the metal strip (1), viewed in the transverse direction of the metal strip (1), where

l   is the length of the metal strip (1) between the two roll stands, between the roll stand (4) and the coiler (6), in the breakdown stand or in front of or behind the deflection roll (5, 40), and
b   is the width of the metal strip (1).

8. Device according to Claim 6 or 7, **characterized in that** it has at least two excursion sensors (2, 21, 22, 23, 24) for measuring the excursion of the metal strip (1), the at least two excursion sensors (2, 21, 22, 23, 24) being arranged in such a way that they measure the excursion of the metal strip (1) at least every 50 cm, viewed in the transverse direction of the metal strip (1).

9. Device according to Claim 6, 7 or 8, **characterized in that** it is formed such that it determines the tensile stress (σ) from measured values determined by the at least two excursion sensors (2, 21, 22, 23, 24), by means of an averaging unit.

10. Device according to one of the preceding claims, **characterized in that** it has a deflection roll (5, 40) for deflecting the metal strip (1).

11. Device according to one of the preceding claims, **characterized in that** it has an excursion device for the periodic excursion of the metal strip (1).

12. Device according to Claim 11, **characterized in that** the excursion device makes the metal strip undergo an excursion with a frequency which lies in the range of the natural frequency.

13. Device according to Claim 11 or 12, **characterized in that** it has a controller for controlling the excursion device on the basis of a value determined by means of the excursion sensor (2, 21, 22, 23, 24).

**14.** Device for determining the strip tension according to one of the preceding claims, **characterized in that** the excursion sensors (2, 21, 22, 23, 24) are arranged in the longitudinal direction of the metal strip (1) at the points at which the maximum amplitude of the characteristic form of oscillation of the natural frequency used for the stress determination occurs.

**15.** Method for determining the tension (s) or the tensile stress (σ) in a metal strip (1) between two roll stands, between a roll stand (4) and a coiler (6), in a breakdown stand or in front of or behind a deflection roll (5, 40), in particular by means of a device according to one of the preceding claims, the excursion of the metal strip (1) being measured, **characterized in that** a frequency spectrum is determined from at least one measuring signal for the excursion, with the aid of which the natural frequency of the metal strip (1) is determined on the basis of the excursion of the metal strip (1).

**16.** Method according to Claim 15, **characterized in that** the natural frequency of the metal strip (1) is determined with the aid of of a maximum amplitude which occurs in the analysis of the respective natural frequency range.

## Revendications

**1.** Dispositif de détermination de l'effort (σ) de traction ou de la traction (s) dans un feuillard (1) métallique entre deux points (40, 5) d'appui, par exemple entre deux cages de laminoir, entre une cage (4) de laminoir et une bobineuse (6), entre une cage (4) de laminoir et un rouleau (5) de renvoi ou entre les rouleaux dans une unité d'étirage ou dans une unité de dressage par étirage, comprenant au moins un capteur (2, 21, 22, 23, 24) de déviation pour mesurer l'oscillation du feuillard (1) métallique perpendiculairement au plan du feuillard, **caractérisé en ce que** le dispositif de détermination de l'effort (σ) de traction ou de la traction (s) du feuillard comporte un analyseur (7, 13) de fréquence de détermination du spectre de fréquences du signal de mesure fourni par le au moins un capteur (2) de déviation et de détermination de la fréquence propre du feuillard métallique en tenant compte de la fréquence dominante.

**2.** Dispositif suivant la revendication 1, **caractérisé en ce que** l'analyseur (7, 31) de fréquence est constitué pour déterminer la fréquence propre du feuillard (1) métallique entre les deux cages de laminoir, entre la cage (4) de laminoir et la bobineuse (6), dans la cage d'étirage ou en amont ou en aval des rouleaux (5, 40) de renvoi, en déterminant une fréquence dominante d'une oscillation du feuillard (1) métallique.

**3.** Dispositif suivant la revendication 1 ou 2, **caractérisé en ce qu'**il comporte un calculateur (8, 32) de traction pour calculer la traction (s) ou l'effort (σ) de traction dans le feuillard (1) métallique en fonction de la fréquence propre du feuillard (1) métallique.

**4.** Dispositif suivant la revendication 3, **caractérisé en ce que** le calculateur (8, 32) de traction détermine l'effort (σ) de traction dans le feuillard (1) métallique suivant

$$\sigma = l^2 c \rho f^2$$

dans laquelle

l    est la longueur du feuillard (1) métallique entre les deux cages de laminoir, entre la cage (4) de laminoir et la bobineuse (6), dans la cage d'étirage ou en amont ou en aval des rouleaux (5, 40) de renvoi,

c    est une constante,

p    est la masse volumique du feuillard (1) métallique, et

f    est la fréquence propre du feuillard (1) métallique.

**5.** Dispositif suivant la revendication 3 ou 4, **caractérisé en ce que** le calculateur (8, 32) de traction détermine la traction (s) dans le feuillard (1) métallique suivant

$$s = l^2 c \rho h b f^2$$

dans laquelle

l    est la longueur du feuillard (1) métallique entre les deux cages de laminoir, entre la cage (4) de laminoir et la bobineuse (6), dans la cage d'étirage ou en amont ou en aval des rouleaux (5, 40) de renvoi,

c    est une constante,

p    est la masse volumique du feuillard (1) métallique,

h    est l'épaisseur du feuillard (1) métallique,

b    est la largeur du feuillard (1) métallique, et

f    est la fréquence propre du feuillard (1) métallique.

**6.** Dispositif suivant la revendication 1, 2, 3, 4 ou 5, **caractérisé en ce qu'**il comprend au moins deux capteurs (2, 21, 22, 23, 24) de déviation pour mesurer la déviation du feuillard (1) métallique, les au moins deux capteurs (2, 21, 22, 23, 24) de déviation étant disposés de manière à mesurer la déviation du feuillard (1) métallique, en des points du feuillard (1) métallique différents, considérés dans la direction transversale du feuillard (1) métallique.

7. Dispositif suivant la revendication 6, **caractérisé en ce qu'**il comprend au moins

$$3\frac{b}{l}$$

capteurs (2, 21, 22, 23, 24) de déviation pour mesurer la déviation du feuillard (1) métallique, les capteurs (2, 21, 22, 23, 24) de déviation étant disposés de façon à mesurer la déviation du feuillard (1) métallique en des points du feuillard (1) métallique différents, considérés dans la direction transversale du feuillard (1) métallique, dans laquelle

l    est la longueur du feuillard (1) métallique entre les deux cages de laminoir, entre la cage (4) de laminoir et la bobineuse (6), dans la cage d'étirage ou en amont ou en aval des rouleaux (5, 40) de renvoi, et
b    est la largeur du feuillard (1) métallique.

8. Dispositif suivant la revendication 6 ou 7, **caractérisé en ce qu'**il comporte au moins deux capteurs (2, 21, 22, 23, 24) de déviation pour mesurer la déviation du feuillard (1) métallique, les au moins deux capteurs (2, 21, 22, 23, 24) de déviation étant disposés de façon à mesurer la déviation du feuillard (1) métallique au moins tous les 50 cm, considérés dans la direction transversale du feuillard (1) métallique.

9. Dispositif suivant la revendication 6, 7 ou 8, **caractérisé en ce qu'**il est constitué de manière à déterminer l'effort (σ) de traction à partir des valeurs de mesure déterminées par les au moins deux capteurs (2, 21, 22, 23, 24) de déviation en formant une moyenne.

10. Dispositif suivant l'une des revendications précédentes, **caractérisé en ce qu'**il comprend un rouleau (5, 40) de renvoi pour le renvoi du feuillard (1) métallique.

11. Dispositif suivant l'une des revendications précédentes, **caractérisé en ce qu'**il comprend un dispositif de déviation pour la déviation périodique du feuillard (1) métallique.

12. Dispositif suivant la revendication 11, **caractérisé en ce que** le dispositif de déviation du feuillard métallique est dévié à une fréquence qui est de l'ordre de la fréquence propre.

13. Dispositif suivant la revendication 11 ou 12, **caractérisé en ce qu'**il comprend un régulateur de régulation du dispositif de déviation en fonction d'une valeur déterminée au moyen du capteur (2, 21, 22, 23, 24) de déviation.

14. Dispositif de détermination de la traction du feuillard suivant l'une des revendications précédentes, **caractérisé en ce que** les capteurs (2, 21, 22, 23, 24) de déviation sont disposés dans la direction longitudinale du feuillard (1) métallique aux points où se produit l'amplitude maximum de la forme d'oscillation caractéristique de la fréquence propre utilisée pour la détermination de l'effort.

15. Procédé de détermination de la traction (s) ou de l'effort (σ) de traction dans un feuillard (1) métallique entre deux cages de laminoir, entre une cage (4) de laminoir et une bobineuse (6) dans une cage d'étirage ou en amont ou en aval d'un rouleau (5, 40) de renvoi, notamment au moyen d'un dispositif suivant l'une des revendications précédentes, en mesurant la déviation du feuillard (1) métallique, **caractérisé en ce que** l'on détermine, à partir d'au moins un signal de mesure de la déviation, un spectre de fréquences à l'aide duquel on détermine la fréquence propre du feuillard (1) métallique en fonction de la dérivation du feuillard (1) métallique.

16. Procédé suivant la revendication 15, **caractérisé en ce que** l'on détermine la fréquence propre du feuillard (1) métallique en s'aidant d'une amplitude maximum qui apparaît lors de l'analyse du domaine respectif de fréquence propre.

FIG 1

1

24

23

22

21

2

b

3

**FIG 2**

33

34

35

1

2

3

21

22

23

24

31

h

b

32

s

f

**FIG 3**

FIG 4

FIG 5